# EUROPEAN PATENT APPLICATION

(11) **EP 4 675 182 A1**
(43) Date of publication of application: **07.01.2026**
(21) Application number: 24203548.3
(22) Date of filing: 30.09.2024
(51) Int. Cl.: F24C 15/20

(54) **HOUSEHOLD APPLIANCE**

(30) Priority: 02.07.2024 CN 202410882349; 02.07.2024 CN 202421552589 U
(71) Applicant: Foshan Shunde Midea Washing Appliances Manufacturing Co., Ltd., Foshan, Guangdong 528311 (CN)
(72) Inventor: ZHENG, Zhibiao, Foshan (CN); ZOU, Yihua, Foshan (CN); ZHANG, Wangao, Foshan (CN); FU, Mali, Foshan (CN)
(74) Representative: Ran, Handong

(57) **Abstract**

A household appliance is provided which includes a platform, a fan, and a filter assembly. The platform has an oil fume inlet. The fan has an air inlet disposed below the oil fume inlet. The filter assembly is disposed between the air inlet of the fan and the oil fume inlet and has a plurality of mesh holes arranged at intervals. The plurality of mesh holes is configured to filter oil fume. The filter assembly comprises a ventilation slot and a water accumulation hole spaced apart from each other. The ventilation slot is in communication with the air inlet of the fan. The water accumulation hole is configured to guide water flowing into the filter assembly out of the filter assembly. Therefore, water flowing from the oil fume inlet to the fan can be collected by the filter assembly and guided out of the filter assembly through the water accumulation hole, avoiding accumulation of water inside the fan, which helps to prolong a service life of the fan. In addition, the oil fume can reach the air inlet of the fan through the ventilation slot, which ensures an air volume entering the fan from the oil fume inlet and helps to improve a filtration efficiency of the oil fume.

## Description

### FIELD

The present application relates to a technical field of household appliances, and more particularly, to a household appliance.

### BACKGROUND

In the field of household appliances, especially in those involving oil fume filtration, a fan, as one of core components, is crucial to effective operation of a whole household appliance in terms of performance and a service life.

### SUMMARY

The present application provides a household appliance.

A household appliance according to an embodiment of the present application includes: a platform having an oil fume inlet; a fan having an air inlet, the air inlet being disposed below the oil fume inlet; and a filter assembly disposed between the air inlet of the fan and the oil fume inlet. The filter assembly is configured to filter oil fume. The filter assembly comprises a ventilation slot and a water accumulation hole spaced apart from each other. The ventilation slot is in communication with the air inlet of the fan. The water accumulation hole is configured to guide water flowing into the filter assembly out of the filter assembly.

In the household appliance according to the embodiment of the present application, the filter assembly is disposed between the air inlet of the fan and the oil fume inlet, which enables water flowing from the oil fume inlet to the fan to be collected by the filter assembly and guided out of the filter assembly through the water accumulation hole, avoiding accumulation of water inside the fan. Therefore, an influence of water on the performance of the fan and possible corrosion and short circuit problems can be reduced, which helps to prolong the service life of the fan. In addition, the oil fume can reach the air inlet of the fan through the ventilation slot, which ensures an air volume entering the fan from the oil fume inlet and helps to improve a filtration efficiency of the oil fume. In addition, setting of the filter assembly effectively prevents the oil fume from directly entering the fan, reducing a frequency that the fan needs to be cleaned due to accumulation of the oil fume, and thus prolonging the service life of the fan.

Optionally, the household appliance further includes a water receiver and a water collector. The water receiver is preferably disposed between the filter assembly and the fan, and has a first housing.

Optionally, the water accumulation hole extends towards the first housing. The first housing has a ventilation hole and a water outlet hole. The water outlet hole is in communication with the water collector. The ventilation hole faces towards the air inlet of the fan directly.

Optionally, the oil fume inlet is provided with a support at an edge of the oil fume inlet. Preferably, the filter assembly includes a second housing, a third housing, and a filter component. The second housing is connected to the third housing. The second housing is disposed at the support. The third housing has the ventilation slot and the water accumulation hole.

The ventilation slot is shielded by the filter component. The filter component has a plurality of mesh holes arranged at intervals and in communication with the ventilation slot.

Optionally, the ventilation slot includes a bottom slot formed at a bottom wall of the third housing. The filter component includes a first filter having the plurality of mesh holes arranged at intervals. The first filter is configured to shield the bottom slot.

Optionally, the bottom wall of the third housing has a plurality of water accumulation holes. Preferably, the plurality of water accumulation holes is formed at two ends of the third housing in a length direction of the third housing.

Optionally, the bottom wall of the third housing includes a first part and a second part connected to the first part. The first part is inclined towards a part of the plurality of water accumulation holes from a connection between the first part and the second part. The second part is inclined towards another part of the plurality of water accumulation holes from the connection between the first part and the second part.

Optionally, the second housing includes a first engagement portion extending towards the bottom wall of the third housing. The ventilation slot may further include two side slots opposite to each other. A slot opening of each of the two side slots has a different orientation from a slot opening of the bottom slot. Each of the two side slots is preferably formed at a side wall of the third housing. The side wall of the third housing is connected to the bottom wall of the third housing.

Optionally, the filter component further includes two second filters configured to shield the two side slots, the two second filters each having a plurality of mesh holes arranged at intervals, the two second filters each being disposed between the first engagement portion and the side wall of the third housing. Preferably, each of the two second filters is attached to a surface of the first engagement portion and a surface of the side wall of the third housing.

Optionally, the first engagement portion includes two first engagement blocks opposite to each other. The bottom wall of the third housing is provided with a second engagement portion including two second engagement blocks opposite to each other. Optionally, the two first engagement blocks abut with an outer surface of the first filter. Optionally, the two second engagement blocks abut with an inner surface of the first filter.

Optionally, two first engagement portions are provided. The two first engagement portions are disposed at two ends of the second housing in a length direction of the second housing, respectively. The second housing includes a shielding portion configured to shield partial region of the first filter. The shielding portion extends in the length direction of the second housing and being connected to the two first engagement portions.

Optionally, the shielding portion has a first thread hole formed at a side of the shielding portion close to the first filter. The third housing has a second thread hole formed at a side of the third housing close to the first filter. A center axis of the first thread hole and a center axis of the second thread hole are collinear.

Optionally, the shielding portion is provided with a fixation portion at a side of the shielding portion facing away from the first filter. Preferably, the fixation portion is disposed above the first thread hole and extends beyond a surface of the shielding portion. Preferably, the fixation portion extends in a width direction of the second housing and is connected to two side walls of the second housing in the width direction of the second housing.

Optionally, the bottom wall of the third housing is provided with a third engagement portion extending in a length direction of the third housing. The first filter is preferably engaged with the third engagement portion.

Additional aspects and advantages of the present application will be provided at least in part in the following description, or will become apparent at least in part from the following description, or can be learned from practicing of the present application.

### BRIEF DESCRIPTION OF THE DRAWINGS

The above and/or additional aspects and advantages of the present application will become more apparent and more understandable from the following description of embodiments taken in conjunction with the accompanying drawings.
FIG. 1 is a schematic structural view of a household appliance according to an embodiment of the present application.
FIG. 2 is a schematic exploded view of a household appliance according to an embodiment of the present application.
FIG. 3 is a schematic exploded view of a filter assembly according to an embodiment of the present application.
FIG. 4 is a partial sectional view of a household appliance according to an embodiment of the present application.
FIG. 5 is a schematic partial view of a household appliance according to an embodiment of the present application.
FIG. 6 is an enlarged view of part a of the household appliance illustrated in FIG. 5.
FIG. 7 is a schematic structural view of a filter assembly according to an embodiment of the present application.
FIG. 8 is a sectional view of the filter assembly taken in direction A-A in FIG. 7.
FIG. 9 is a sectional view of the filter assembly taken in direction B-B in FIG. 7.
FIG. 10 is a schematic view of air flowing through a filter assembly according to an embodiment of the present application.
FIG. 11 is a schematic view of water flowing through a filter assembly according to an embodiment of the present application.

Description of reference numerals of the accompanying drawings:
household appliance 100; platform 10; oil fume inlet 11; fan 20; filter assembly 30; ventilation slot 31; water accumulation hole 32; air inlet of the fan 21; air inlet grille 101; water receiver 40; water collector 50; first housing 41; ventilation hole 410; water outlet hole 411; support 12; second housing 33; third housing 34; filter component 35; bottom slot 310; bottom wall of the third housing 340; first filter 350; first part 3400; second part 3401; first engagement portion 330; side slot 311; side wall of the third housing 341; second filter 351; first engagement block 3300; second engagement portion 331; second engagement block 3310; shielding portion 332; first thread hole 3320; second thread hole 342; fixation portion 333; third engagement portion 343.

### DETAILED DESCRIPTION OF THE EMBODIMENTS

Embodiments of the present application will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present application.

In the description of the present application, it should be understood that, the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", and "anti-clockwise," should be construed to refer to the orientation or the position as shown in the drawings, and is only for the convenience of describing the present application and simplifying the description, rather than indicating or implying that the pointed device or element must have a specific orientation, or be constructed and operated in a specific orientation, and therefore cannot be understood as a limitation of the present application. In addition, the terms such as "first" and "second" are only used for descriptive purposes, and cannot be understood as indicating or implying relative importance or implicitly indicating the number of indicated technical features. Therefore, the features associated with "first" and "second" may explicitly or implicitly include one or more of the features. In the description of the present application, "plurality" means two or more, unless otherwise specifically defined.

In the description of the present application, it should be noted that, unless otherwise clearly specified and limited, terms such as "mount", "connect", "connect to", and the like should be understood in a broad sense. For example, it may be a fixed connection or a detachable connection or connection as one piece; mechanical connection or electrical connection or mutual communication; direct connection or indirect connection through an intermediate; or internal communication of two components or interaction relationship between two components. For those skilled in the art, specific meanings of the above-mentioned terms in the present application can be understood according to specific circumstances.

In the present application, unless expressly stipulated and defined otherwise, the first feature "on" or "under" the second feature may mean that the first feature is in direct contact with the second feature, or the first and second features are in indirect contact through another feature between the first and second features. In addition, the first feature "above" the second feature means that the first feature is directly above or obliquely above the second feature, or simply means that the level of the first feature is higher than that of the second feature. The first feature "below" the second feature may mean that the first feature is directly below or obliquely below the second feature, or simply mean that the level of the first feature is smaller than that of the second feature.

Various embodiments or examples for implementing different structures of the present application are provided below. In order to simplify the description of the present application, components and arrangements of specific examples are described herein. Of course, these specific examples are merely for the purpose of illustration, rather than limiting the present application. Further, the same reference numerals and/or reference letters may appear in different examples of the present application for the purpose of simplicity and clarity, instead of indicating a relationship between different embodiments and/or the discussed arrangements. In addition, the present application provides examples of various specific processes and materials. However, applications of other processes and/or the use of other materials are conceivable for those of ordinary skill in the art.

The inventors found that in the related art, water may flow from an oil fume inlet of the household appliance to the fan during use. Due to lack of effective waterproofing and drainage mechanisms, water can easily enter the fan, and thus a large amount of standing water can accumulate inside the fan over time. Water accumulation inside the fan will not only affect the performance of the fan, but may also cause corrosion and short circuit, significantly shortening the service life of the fan.

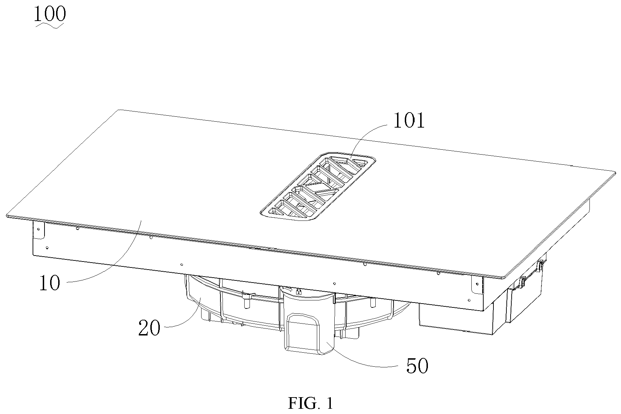

As illustrated in FIG. 1, FIG. 2, and FIG. 3, a household appliance 100 according to the embodiment of the present application includes a platform 10, a fan 20, and a filter assembly 30. The platform 10 has an oil fume inlet 11. The fan 20 has an air inlet 21 disposed below the oil fume inlet 11. The filter assembly 30 is disposed between the air inlet 21 of the fan 20 and the oil fume inlet 11 and has a plurality of mesh holes arranged at intervals. The plurality of mesh holes is configured to filter oil fume. The filter assembly 30 comprises a ventilation slot 31 and a water accumulation hole 32. The ventilation slot 31 is spaced apart from the water accumulation hole 32. The ventilation slot 31 is in communication with the air inlet 21 of the fan 20. The water accumulation hole 32 is configured to guide water flowing into the filter assembly 30 out of the filter assembly.

In the household appliance 100 according to the embodiment of the present application, the filter assembly 30 is disposed between the air inlet 21 of the fan 20 and the oil fume inlet 11, which enables water flowing from the oil fume inlet 11 to the fan 20 to be collected by the filter assembly 30 and guided out of the filter assembly through the water accumulation hole 32, avoiding accumulation of water inside the fan 20. Therefore, an influence of water on performance of the fan 20 and possible corrosion and short circuit problems can be reduced, which helps to prolong the service life of the fan 20. In addition, the oil fume can reach the air inlet 21 of the fan 20 by the ventilation slot 31, which ensures an air volume entering the fan 20 from the oil fume inlet 11 and helps to improve a filtration efficiency of the oil fume. In addition, arrangement of the filter assembly 30 effectively prevents the oil fume from directly entering the fan 20, reduces a frequency that the fan 20 needs to be cleaned due to accumulation of the oil fume, and thus prolongs the service life of the fan 20.

In an exemplary embodiment of the present application, the household appliance 100 may be an electrical appliance capable of filtering the oil fume, such as an air purifier or an all-in-one cooker. The platform 10 may be a mounting base of the household appliance 100 and may be used to protect internal components and to guide the oil fume into an interior of the household appliance 100.

The oil fume inlet 11 may be a through hole formed at the platform 10. One or more of oil fume inlets 11 may be formed. The oil fume inlet 11 may be in a regular shape such as a circle or a rectangle, or may be in an irregular shape. During use of the household appliance 100, water may be present on the platform 10, and may enter the interior of the household appliance 100 by the oil fume inlet 11. Since the air inlet 21 of the fan 20 is disposed below the oil fume inlet 11, water entering the oil fume inlet 11 easily flows into the fan 20. The filter assembly 30 is disposed between the air inlet 21 of the fan 20 and the oil fume inlet 11, which enables the water to flow into the filter assembly 30 instead of into the fan 20.

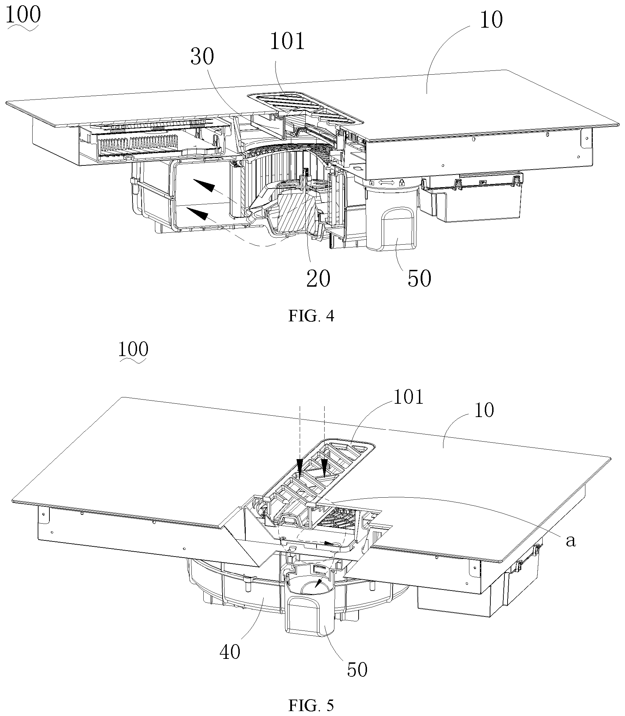

As illustrated in FIG. 4, a flow direction of air is illustrated by dashed lines with arrows. It should be noted that the shown flow direction is merely illustration for convenience of understanding, and is not intended to limit the embodiments of the present application. The fan 20 may be a centrifugal fan, an axial flow fan, a mixed flow fan, or the like. The fan 20 is configured to draw air with the oil fume and discharge the air with the oil fume from an air outlet of the fan 20 through a formed air duct. The air can be filtered by the filter assembly 30 under the action of the fan 20.

The filter assembly 30 is an assembly that filters the oil fume by a filter. The filter can intercept and filter oil fume particles passing through the filter assembly 30. The filter can be made of stainless steel, aluminum or plastic. A size and a shape of a mesh hole of the filter can be set as desired.

The ventilation slot 31 is a through slot of the filter assembly 30 that is in communication with the air inlet 21 of the fan 20. One or more of ventilation slots 31 may be formed. The water accumulation hole 32 is a through hole formed at the filter assembly 30. One or more of water accumulation holes 32 may be formed. A shape of the water accumulation hole 32 may be in a regular shape such as a circle or a rectangle, or may be in an irregular shape. Water flowing into the filter assembly 30 can be discharged from the filter assembly 30 through the water accumulation hole 32.

When the air with the oil fume particles passes through the filter assembly 30, the oil fume particles in the air may be intercepted and filtered by the filter, while air without the oil fume particles can directly pass through the filter. Further, after passing through the filter, the air reaches the air inlet 21 of the fan 20 through the ventilation slot 31, then enters the fan 20 from the air inlet 21 of the fan 20, and is discharged from the air outlet of the fan 20.

As illustrated in FIG. 1, FIG. 2, and FIG. 4, in an embodiment, an air inlet grille 101 may further be disposed above the filter assembly 30. The air inlet grille 101 may block passage of large particulate matters, providing preliminary protection.

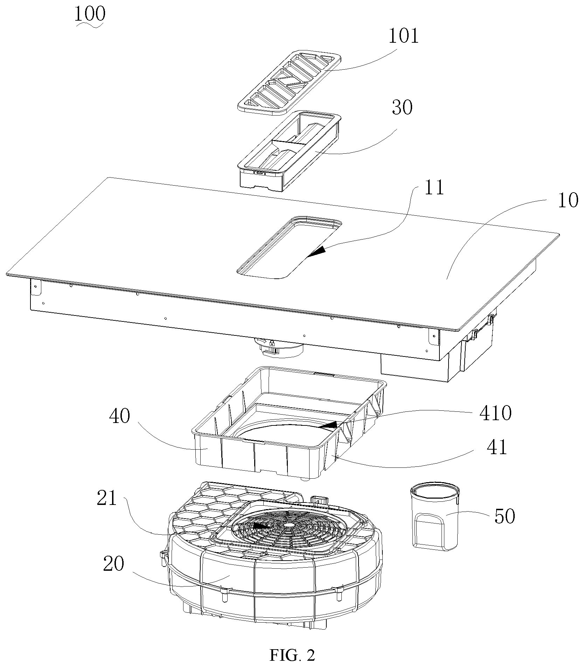

As illustrated in FIG. 2, FIG. 5, and FIG. 6, a flow direction of the water is illustrated by dashed lines with arrows. It should be noted that the shown flow direction is merely illustration for convenience of understanding, and is not intended to limit the embodiments of the present application. In some embodiments, the household appliance 100 further includes a water receiver 40 and a water collector 50. The water receiver 40 is disposed between the filter assembly 30 and the fan 20 and includes a first housing 41. The water accumulation hole 32 extends towards the first housing 41. The first housing 41 has a ventilation hole 410 and a water outlet hole 411. The water outlet hole 411 is in communication with the water collector 50. The ventilation hole 410 faces towards the air inlet 21 of the fan 20 directly.

In this way, the water accumulation hole 32 in the filter assembly 30 extends directly towards the first housing 41, in such a manner that the water guided out of the filter assembly 30 can be more effectively collected by the water receiver 40, resulting in a higher drainage efficiency. Water in the water receiver 40 can flow to the water collector 50 through the water outlet hole 411, facilitating regular maintenance. The ventilation hole 410 formed directly facing towards the air inlet 21 of the fan 20 can allow the oil fume to reach the air inlet 21 of the fan 20 smoothly, which can ensure the air volume entering the fan 20 from the oil fume inlet 11.

In an exemplary embodiment of the present application, the water receiver 40 is configured to receive water guided out of the filter assembly 30. The water receiver 40 may be fixed to the platform 10 by bolted connection, adhesion and other fixed methods. The first housing 41 may have a semi-closed structure. The first housing 41 may have an opening towards the water accumulation hole 32. Water flowing out of the water accumulation hole 32 may flow into the first housing 41 through the opening. Both the ventilation hole 410 and the water outlet hole 411 may be formed at the bottom wall of the first housing 41. A size of the ventilation hole 410 may be equivalent to that of the air inlet 21 of the fan 20 to ensure the air volume entering the fan 20.

One or more of water outlet holes 411 may be provided. The water outlet hole 411 may be in a regular shape such as a circle or a rectangle, or may be in an irregular shape. The water outlet hole 411 may face towards a water inlet of the water collector 50 directly to enable water flowing out of the water outlet hole 411 to directly flow into the water collector 50. The water outlet hole 411 may be in communication with the water collector 50 by a connection component such as a water pipe.

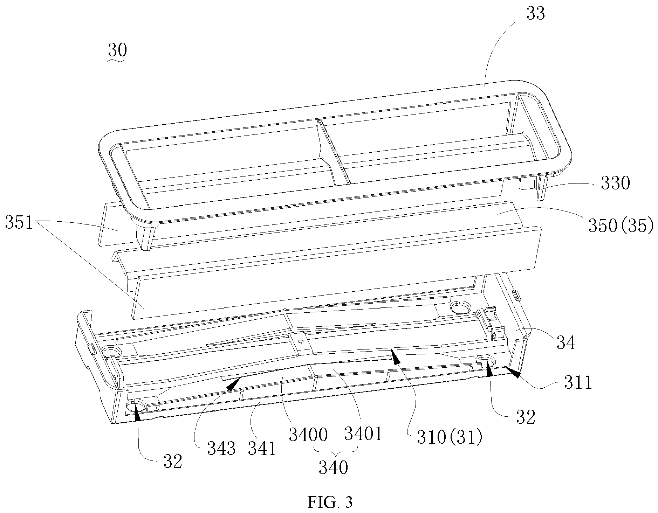

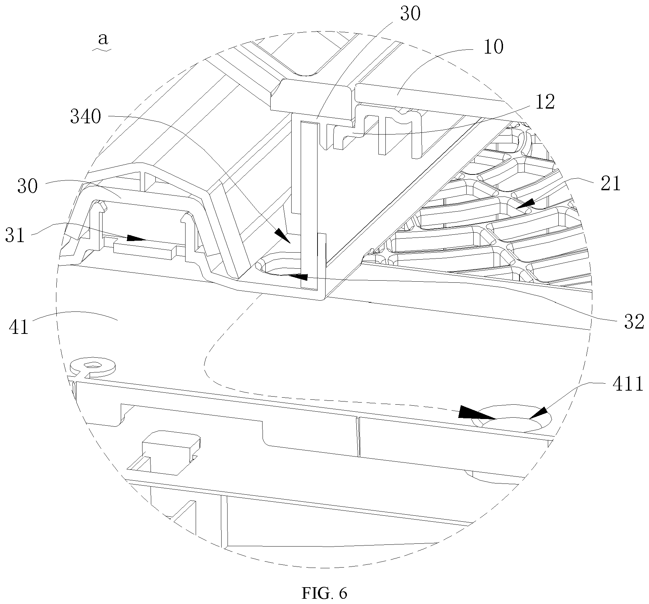

As illustrated in FIG. 3 and FIG. 6, in some embodiments, the oil fume inlet 11 is provided with a support 12 at an edge of the oil fume inlet 11. The filter assembly 30 includes a second housing 33, a third housing 34, and a filter component 35. The second housing 33 is connected to the third housing 34. The second housing 33 is disposed at the support 12. The third housing 34 has the ventilation slot 31 and the water accumulation hole 32.

The ventilation slot 31 is shielded by the filter component 35. The filter component 35 has a plurality of mesh holes arranged at intervals and in communication with the ventilation slot 31.

In this way, by disposing the support 12 at the edge of the oil fume inlet 11 and placing the second housing 33 at the support 12, mounting and removal of the filter assembly 30 can be facilitated. The mesh hole on the filter component 35 and the ventilation slot 31 at the second housing 33 can provide a passage for the oil fume to enable the oil fume to pass through the filter component 35 after being filtered, so as to ensure the air volume entering the fan 20.

Water flowing towards the filter assembly 30 can be collected by the third housing 34 and can be discharged through the water accumulation hole 32, which avoids accumulation of water inside the fan 20. Therefore, the influence of water on the performance of the fan 20 and possible corrosion and short circuit problems can be reduced, which helps to prolong the service life of the fan 20.

In an exemplary embodiment of the present application, the support 12 may be disposed at the platform 10 by means of bolted connection or threaded connection, or may be attached to the platform 10 by an adhesive. The second housing 33 and the third housing 34 may be made of metal or specially coated plastic to resist erosion of the oil fume and the water.

The filter component 35 is the part of the filter assembly 30, which is configured to directly filter the oil fume. The filter component 35 may include one or more filters. A projection area of the filter component 35 may be greater than or equal to an orthographic projection area of the ventilation slot 31.

As illustrated in FIG. 3, in some embodiments, the ventilation slot 31 includes a bottom slot 310 formed at a bottom wall 340 of the third housing 34. The filter component 35 includes a first filter 350 having the plurality of mesh holes arranged at intervals. The first filter 350 is configured to shield the bottom slot 310.

In this way, since the oil fume can directly reach the bottom slot 310 after passing through the mesh hole, an air volume through the first filter 350 is not excessively reduced, which helps to ensure the air volume entering the fan 20. Since the first filter 350 can be individually replaced or cleaned without replacing an entire filter assembly 30, a service life of the filter assembly 30 can be prolonged, reducing a maintenance cost.

In an exemplary embodiment of the present application, the bottom slot 310 is a ventilation slot 31 formed at the bottom wall 340 of the third housing 34. The air with the oil fume can reach the air inlet 21 of the fan 20 through the bottom slot 310. The first filter 350 may have a filter disposed at the bottom wall 340 of the third housing 34 and a structure for supporting the filter. The first filter 350 is configured to filter the oil fume in the air passing through the bottom slot 310. An orthographic projection area of the first filter 350 may be greater than or equal to an orthographic projection area of the bottom slot 310 to meet a filtration demand for air.

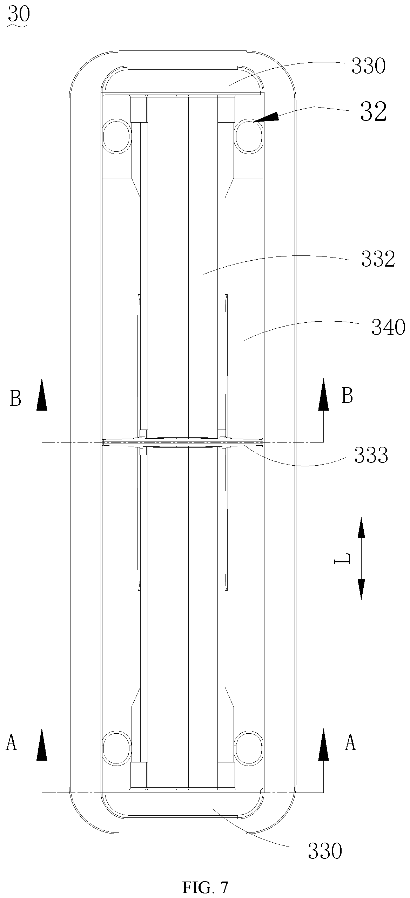

As illustrated in FIG. 3 and FIG. 7, in some embodiments, the bottom wall 340 of the third housing 34 has a plurality of water accumulation holes 32. The plurality of water accumulation holes 32 are formed at two ends of the third housing 34 in a length direction L of the third housing 34. The bottom wall 340 of the third housing 34 includes a first part 3400 and a second part 3401 connected to the first part 3400. The first part 3400 is inclined towards a part of the plurality of water accumulation holes 32 from a connection between the first part 3400 and the second part 3401. The second part 3401 is inclined towards another part of the plurality of water accumulation holes 32 from the connection between the first part 3400 and the second part 3401.

In this way, by enabling the first part 3400 and the second part 3401 of the bottom wall 340 of the third housing 34 to be inclined towards the water accumulation holes 32 in different directions, respectively, retention of water on the bottom wall 340 of the third housing 34 can be reduced, avoiding formation of a water collection region, allowing water to flow out of the third housing 34 from the water accumulation hole 32.

In an exemplary embodiment of the present application, two, three, four, or even more water accumulation holes 32 may be formed. Angles at which the first part 3400 and the second part 3401 each are inclined towards the water accumulation holes 32 may be the same or different.

As illustrated in FIG. 3, FIG. 8, and FIG. 9, in some embodiments, the second housing 33 includes a first engagement portion 330 extending towards the bottom wall 340 of the third housing 34. The ventilation slot 31 further includes two side slots 311 opposite to each other. A slot opening of each of the two side slots 311 has a different orientation from a slot opening of the bottom slot 310. Each of the two side slots 311 is formed at a side wall 341 of the third housing 34. The side wall 341 of the third housing 34 is connected to the bottom wall 340 of the third housing 34.

The filter component 35 further includes two second filters 351. Each of the two second filters 351 has a plurality of mesh holes arranged at intervals. The two second filters 351 are configured to shield the two side slots 311. The two second filters 351 each are disposed between the first engagement portion 330 and the side wall 341 of the third housing 34. Each of the two second filters 351 is attached to a surface of the first engagement portion 330 and a surface of the side wall 341 of the third housing 34.

In this way, the oil fume can not only enter the fan 20 through the bottom slot 310 formed at the bottom wall, but also enter the fan 20 through the side slot 311, which increases a path for the oil fume to enter the fan 20, ensuring the air volume entering the fan 20. A mesh hole at the second filter 351 can filter the oil fume, and by cooperating with a mesh hole at the first filter 350, an oil fume filtration efficiency of the filter assembly 30 can be improved. The second filter 351 can be fixed by the first engagement portion 330 and the third housing 34, preventing the second filter 351 from vibrating due to an external force during use, and thus improving stability of the second filter 351.

In an exemplary embodiment of the present application, the first engagement portion 330 may be a protrusion or an engagement slot. The second housing 33 may be engaged with the third housing 34 by the first engagement portion 330. The side slot 311 is a ventilation slot 31 formed at the side wall 341 of the third housing 34. The air with the oil fume can reach the air inlet 21 of the fan 20 through the side slot 311. The slot opening of the side slot 311 may face towards a first direction. The slot opening of the bottom slot 310 may face towards a second direction. An angle between the first direction and the second direction may be a right angle or another angle.

The second filter 351 may have a filter disposed close to the side wall 341 of the third housing 34 and a structure for supporting the filter. The second filter 351 is configured to filter the oil fume in the air passing through the side slot 311. An orthographic projection area of the second filter 351 may be greater than or equal to an orthographic projection area of the side slot 311 to meet the filtration demand for the air. The bottom wall 340 of the third housing 34, the first engagement portion 330, and the side wall 341 of the third housing 34 can provide support and limit for the second filter 351.

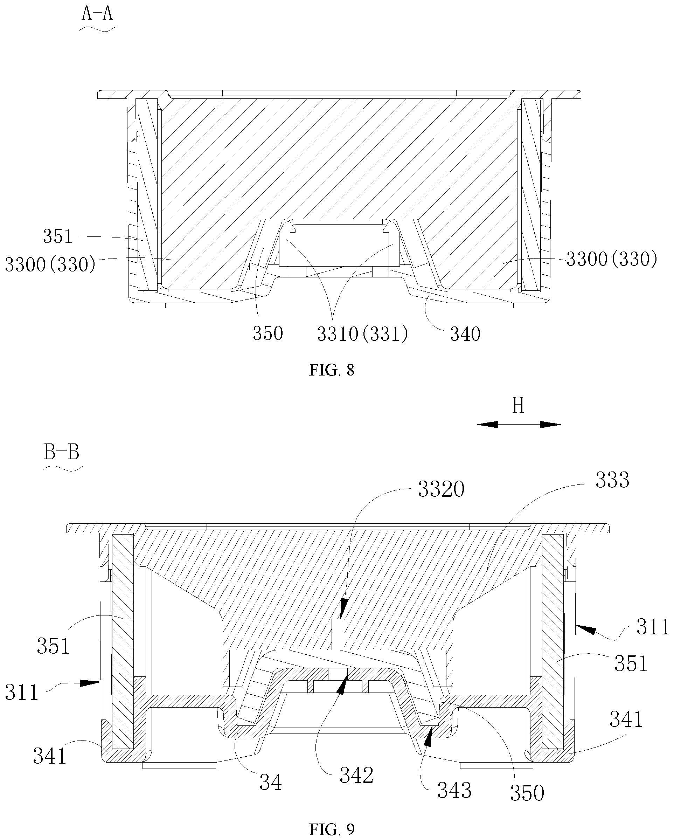

As illustrated in FIG. 8 and FIG. 9, in some embodiments, the two side slots 311 have the same shape and size, and the two second filters 351 have the same shape and size.

As described above, since the two side slots 311 have the same shape and size, they are easy to process and manufacture. Also, since the two second filters 351 have the same shape and size, they are easy to manufacture.

As illustrated in FIG. 8, in some embodiments, the first engagement portion 330 includes two first engagement blocks 3300 opposite to each other. The bottom wall 340 of the third housing 34 is provided with a second engagement portion 331 including two second engagement blocks 3310 opposite to each other. The two first engagement blocks 3300 abut with an outer surface of the first filter 350. The two second engagement blocks 3310 abut with an inner surface of the first filter 350.

In this way, the first engagement block 3300 and the second engagement block 3310 cooperate with each other to fix the first filter 350, preventing the first filter 350 from vibrating due to the external force during use, and thus improving stability of the first filter 350.

In an exemplary embodiment of the present application, before abutting with the inner surface of the first filter 350, a distance between the two second engagement blocks 3310 may be a first distance, and in this case, the two second engagement blocks 3310 are in a first state. After abutting with the inner surface of the first filter 350, a distance between the two second engagement blocks 3310 may be a second distance, and in this case, the two second engagement blocks 3310 are in a second state.

The first distance is greater than the second distance. When the two second engagement blocks 3310 are in the second state, the two second engagement blocks 3310 apply external forces to the inner surface of the first filter member 350 in different directions to allow the first filter 350 to have a tendency to extend in its own width direction. Since the first engagement block 3300 abuts with the outer surface of the first filter 350, the first engagement block 3300 applies a force to limit extension of the first filter 350 to complete fixation of the first filter 350.

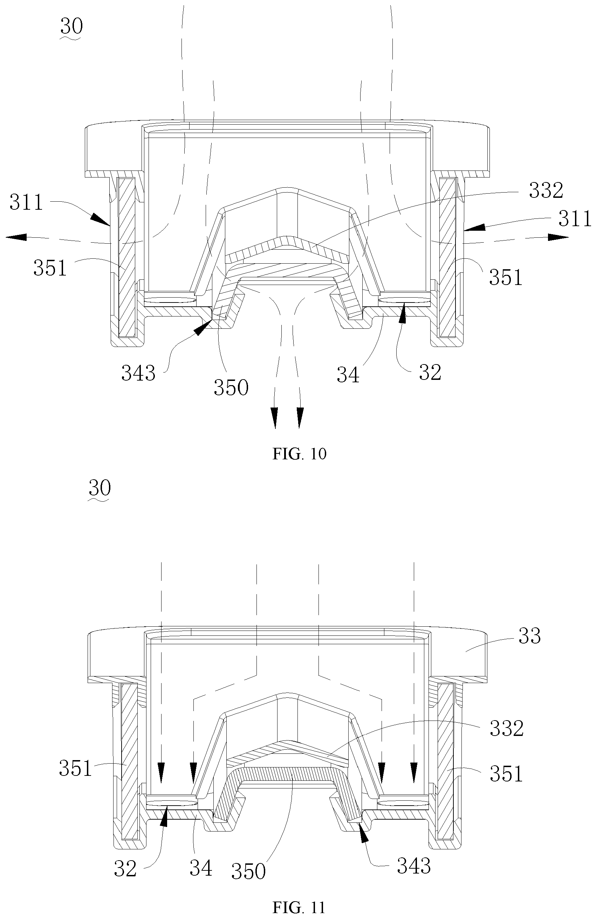

As illustrated in FIG. 7, FIG. 10, and FIG. 11, a flow direction of air is illustrated by dashed lines with arrows in FIG. 10, and a flow direction of water is illustrated by dashed lines with arrows in FIG. 11. It should be noted that the flow directions shown in the drawings are merely illustrations for convenience of understanding, and are not intended to limit the embodiments of the present application. In some embodiments, two first engagement portions 330 are provided. The two first engagement portions 330 are disposed at two ends of the second housing 33 in a length direction of the second housing 33, respectively. The second housing 33 includes a shielding portion 332. The shielding portion 332 extends in the length direction of the second housing 33 and is connected to the two first engagement portions 330. The shielding portion 332 is configured to shield partial region of the first filter 350.

As described above, by providing two first engagement portions 330, a contact point between the first engagement portion 330 and the first filter 350 can be increased. Therefore, the first filter 350 can be more effectively fixed. The shielding portion 332 extends in the length direction of the second housing 33 and is connected to the two first engagement portions 330, improving overall connection strength of the filter assembly 30.

Further, since the shielding portion 332 shields partial region of the first filter 350, the shielding portion 332 can block water flowing towards the first filter 350, further reducing probability of water flowing into the fan 20. However, since the shielding portion 332 does not completely shield the first filter 350, the air can pass through these regions of the shielding portion 332 not covering the first filter 350, ensuring the air volume entering the fan 20 from the oil fume inlet 11, and thus facilitating improving the filtration efficiency of the oil fume.

In an exemplary embodiment of the present application, there is an overlapping region between the shielding portion 332 and the first filter 350. An area of the overlapping region between the shielding portion 332 and the first filter 350 is smaller than an area of a surface of a side of the first filter 350 facing towards the shielding portion 332. The shielding portion 332 may shield a part of a region on the first filter 350, and another part of the region on the first filter 350 may allow the air to pass through since it is not shielded.

As illustrated in FIG. 9, in some embodiments, the shielding portion 332 has a first thread hole 3320 formed at a side of the shielding portion 332 close to the first filter 350. The third housing 34 has a second thread hole 342 formed at a side of the third housing 34 close to the first filter 350. A center axis of the first thread hole 3320 and a center axis of the second thread hole 342 are collinear.

In this way, cooperation between the first thread hole 3320 and the second thread hole 342 can allow the first filter 350 to be more stably fixed to the third housing 34, which can prevent the first filter 350 from falling off due to the external force during use, improving the stability of the first filter 350.

In an exemplary embodiment of the present application, the first thread hole 3320 is a hole formed at the shielding portion 332 and has an internal thread. The second thread hole 342 is a hole formed at the third housing 34 and has an internal thread. The first thread hole 3320 and the second thread hole 342 may be fixed to each other by means of bolts, screws, or other fasteners. The second thread hole 342 may have the same thread gauge as the first thread hole 3320 to ensure that the fasteners can be smoothly screwed into two thread holes simultaneously.

As illustrated in FIG. 7 and FIG. 9, in some embodiments, the shielding portion 332 is provided with a fixation portion 333 at a side of the shielding portion 332 facing away from the first filter 350. The fixation portion 333 is disposed above the first thread hole 3320. The fixation portion 333 extends beyond a surface of the shielding portion 332. The fixation portion 333 extends in a width direction H of the second housing 33 and is connected to two side walls of the second housing 33 in the width direction H of the second housing 33.

In this way, the fixation portion 333 can be connected to the two side walls of the second housing 33 in the width direction of the second housing 33, which makes a structure of the fixation portion 333 relatively stable. In the process of cooperating the first thread hole 3320 with the second thread hole 342, the fixation portion 333 can provide stable support to allow the first thread hole 3320 to be easily connected to the second thread hole 342.

In an exemplary embodiment of the present application, the fixation portion 333 may be a bump or a rib plate protruding from a surface of the shielding portion 332. The fixation portion 333 may have a T-shape, a wing-shape, or the like to provide support.

As illustrated in FIG. 3, FIG. 9 to FIG. 11, in some embodiments, the bottom wall 340 of the third housing 34 is provided with a third engagement portion 343. The third engagement portion 343 extends in a length direction L of the third housing 34. The first filter 350 is engaged with the third engagement portion 343.

As described above, the third engagement portion 343 is engaged with the first filter 350, enabling the first filter 350 to be easily assembled and disassembled. Since the third engagement portion 343 extends in the length direction L of the third housing 34, the third engagement portion 343 can provide a longer contact surface, which enables the first filter 350 to be more effectively fixed to the bottom wall.

In an exemplary embodiment of the present application, the third engagement portion 343 may be an engagement slot or an engagement hole extending in the length direction L of the third housing 34. A plurality of third shielding portions 332 may be provided. For example, the third shielding portions 332 may be two engagement slots located at two sides of the bottom slot 310, respectively. Two sides in the width direction of the first filter 350 may be engaged into the two engagement slots, respectively. For example, the third engagement portions 343 may be two engagement holes. The first filter 350 may be provided with two engagement blocks. The two engagement blocks are engaged into the two engagement holes, respectively.

In the present application, the description with reference to the terms "one embodiment", "some embodiments", "an illustrative embodiment", "an example", "a specific example", or "some examples", etc., means that specific features, structures, materials, or characteristics described in conjunction with the embodiment(s) or example(s) are included in at least one embodiment or example of the present application. In the present application, any illustrative reference of the above terms does not necessarily refer to the same embodiment(s) or example(s). Moreover, the specific features, structures, materials, or characteristics as described can be combined in any one or more embodiments or examples as appropriate.

## Claims

1. A household appliance (100), comprising:
a platform (10) having an oil fume inlet (11);
a fan (20) having an air inlet (21), the air inlet (21) disposed below the oil fume inlet (11); and
a filter assembly (30) disposed between the air inlet (21) of the fan (20) and the oil fume inlet (11), wherein:
the filter assembly (30) is configured to filter oil fume,
the filter assembly (30) comprises a ventilation slot (31) and a water accumulation hole (32) spaced apart from each other,
the ventilation slot (31) is in communication with the air inlet (21) of the fan (20), and
the water accumulation hole (32) is configured to guide water flowing into the filter assembly (30) out of the filter assembly (30).

2. The household appliance (100) according to claim 1, further comprising a water receiver (40) and a water collector (50), wherein:
the water receiver (40) is disposed between the filter assembly (30) and the fan (20), and has a first housing (41);
the water accumulation hole (32) extends towards the first housing (41); and
the first housing (41) has a ventilation hole (410) and a water outlet hole (411), the water outlet hole (411) is in communication with the water collector (50), and the ventilation hole (410) faces towards the air inlet (21) of the fan (20) directly.

3. The household appliance (100) according to claim 1 or 2, wherein:
the oil fume inlet (11) is provided with a support (12) at an edge of the oil fume inlet (11);
the filter assembly (30) comprises a second housing (33), a third housing (34), and a filter component (35);
the second housing (33) is connected to the third housing (34);
the second housing (33) is disposed at the support (12);
the third housing (34) has the ventilation slot (31) and the water accumulation hole (32);
the ventilation slot (31) is shielded by the filter component (35); and
the filter component (35) has a plurality of mesh holes arranged at intervals and in communication with the ventilation slot (31).

4. The household appliance (100) according to claim 3, wherein:
the ventilation slot (31) comprises a bottom slot (310) formed at a bottom wall (340) of the third housing (34); and
the filter component (35) comprises a first filter (350) having the plurality of mesh holes arranged at intervals, and the first filter (350) is configured to shield the bottom slot (310).

5. The household appliance (100) according to claim 4, wherein:
the bottom wall (340) of the third housing (34) has a plurality of water accumulation holes (32) formed at two ends of the third housing (34) in a length direction of the third housing (34); and
the bottom wall (340) of the third housing (34) comprises a first part (3400) and a second part (3401) connected to the first part (3400), the first part (3400) is inclined towards a part of the plurality of water accumulation holes (32) from a connection between the first part (3400) and the second part (3401), and the second part (3401) is inclined towards another part of the plurality of water accumulation holes (32) from the connection between the first part (3400) and the second part (3401).

6. The household appliance (100) according to claim 4 or 5, wherein:
the second housing (33) comprises a first engagement portion (330) extending towards the bottom wall (340) of the third housing (34);
the ventilation slot (31) further comprises two side slots (311) opposite to each other, a slot opening of each of the two side slots (311) has a different orientation from a slot opening of the bottom slot (310), each of the two side slots (311) is formed at a side wall (341) of the third housing (34), and the side wall (341) of the third housing (34) is connected to the bottom wall (340) of the third housing (34); and
the filter component (35) further comprises two second filters (351) configured to shield the two side slots (311), the two second filters (351) each have a plurality of mesh holes arranged at intervals, the two second filters (351) are disposed between the first engagement portion (330) and the side wall (341) of the third housing (34), and each of the two second filters (351) is attached to a surface of the first engagement portion (330) and a surface of the side wall (341) of the third housing (34).

7. The household appliance (100) according to claim 6, wherein:
the first engagement portion (330) comprises two first engagement blocks (3300) opposite to each other, the two first engagement blocks (3300) abut with an outer surface of the first filter (350); and
the bottom wall (340) of the third housing (34) is provided with a second engagement portion (331) comprising two second engagement blocks (3310) opposite to each other, the two second engagement blocks (3310) abut with an inner surface of the first filter (350).

8. The household appliance (100) according to claim 6 or 7, wherein:
two first engagement portions (330) are provided, the two first engagement portions (330) are disposed at two ends of the second housing (33) in a length direction of the second housing (33), respectively; and
the second housing (33) comprises a shielding portion (332) configured to shield partial region of the first filter (350), the shielding portion (332) extends in the length direction of the second housing (33) and is connected to the two first engagement portions (330).

9. The household appliance (100) according to claim 8, wherein:
the shielding portion (332) has a first thread hole (3320) formed at a side of the shielding portion (332) close to the first filter (350);
the third housing (34) has a second thread hole (342) formed at a side of the third housing (34) close to the first filter (350); and
a center axis of the first thread hole (3320) and a center axis of the second thread hole (342) are collinear.

10. The household appliance (100) according to claim 9, wherein the shielding portion (332) is provided with a fixation portion (333) at a side of the shielding portion (332) facing away from the first filter (350), the fixation portion (333) is disposed above the first thread hole (3320) and extends beyond a surface of the shielding portion (332), and the fixation portion (333) extends in a width direction of the second housing (33) and is connected to two side walls of the second housing (33) in the width direction of the second housing (33).

11. The household appliance (100) according to any one of claims 6 to 10, wherein the bottom wall (340) of the third housing (34) is provided with a third engagement portion (343) extending in a length direction of the third housing (34), and the first filter (350) is engaged with the third engagement portion (343).
